**Europäisches Patentamt**

(19) **European Patent Office**

**Office européen des brevets**

(11) Veröffentlichungsnummer: **0 016 904**
**B1**

(12) EUROPÄISCHE PATENTSCHRIFT

(45) Veröffentlichungstag der Patentschrift:
**27.01.82**

(51) Int. Cl.³: **B 65 G 65/48** // B65G47/12

(21) Anmeldenummer: **80100247.8**

(22) Anmeldetag: **18.01.80**

(54) **Vorrichtung zum Bunkern, Vereinzein und Dosieren von Fasergut.**

(30) Priorität: **04.04.79 DE 2913504**

(43) Veröffentlichungstag der Anmeldung:
**15.10.80 Patentblatt 80/21**

(45) Bekanntmachung des Hinweises auf die Patenterteilung:
**27.01.82 Patentblatt 82/4**

(84) Benannte Vertragsstaaten:
**BE FR GB LU NL**

(56) Entgegenhaltungen:
**DE-A-1 910 134**
**FR-A-1 042 502**
**FR-A-1 075 957**
**GB-A-410 801**
**GB-A-913 671**
**US-A-3 540 604**

(73) Patentinhaber: **Bergwerksverband GmbH,**
**Franz-Fischer-Weg 61, D-4300 Essen 13 (DE)**

(72) Erfinder: **Bock, Burkhard, Dr. Ing., Neckarstrasse 21,**
**D-4100 Duisburgl (DE)**
Erfinder: **Biesler, Dieter, Walpurgisstrasse 25,**
**D-4650 Gelsenkirchen (DE)**
Erfinder: **Gahlmann, Bernd, Bochumerstrasse 262,**
**D-4650 Gelsenkirchen (DE)**
Erfinder: **Gomoll, Manfred, Am Eichenkamp 19,**
**D-3012 Langenhagen (DE)**
Erfinder: **Maichin, Detlev, Dipl.-Ing., Wolfskuhle 70,**
**D-4300 Essen 14 (DE)**

(74) Vertreter: **Frühbuss, Heinrich, Dr.rer.nat. et al,**
**Franz-Fischer-Weg 61, D-4300 Essen 13 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Vorrichtung zum Bunkern, Vereinzeln und Dosieren von Fasergut

Die Erfindung betrifft eine Vorrichtung zum Bunkern, Vereinzeln und Dosieren von beispielsweise in Spritzbeton als Armierung zu verwendendem Fasergut, insbesondere Stahlfasern, mit einer unterhalb eines Bunkeraustrags angeordneten Dosiereinrichtung, vorzugsweise in Form einer rotierenden Stachelwalze.

Im untertägigen Strecken- sowie im Tunnelbau ist es seit einiger Zeit bekannt, anstelle von Drahtmattenarmierungen den Spritzbeton durch Stahlfasern zu verstärken. Die Armierung wird mit dem Beton zubereitet und über das Spritzverfahren am Einsatzort aufgetragen. Ein wesentlicher Vorteil der Verwendung von Stahlfasern im Spritzbeton liegt im Vergleich zu anderen Armierungen in den günstigen Kosten.

Besondere Schwierigkeiten bereiten die ca. 15—30 mm langen Stahlfasern mit einem Durchmesser von ca. 0,2—0,4 mm im Vereinzeln und Dosieren. Bereits bei dem in Paketen oder Säcken angelieferten Fasermaterial als auch im Bunker liegen Faserklumpen vor. Aus diesem Grund ist eine Entwirrung der Faserklumpen zwingend erforderlich. Um die sperrigen, leicht verformbaren und agglomerierbaren Stahlfasern zu vereinzeln bzw. zu dosieren sind bisher Stachelwalzen, Rütteleinrichtungen, Schubkratzeinrichtungen sowie Rippen- und Rauhflächenkegel eingesetzt worden.

Sämtliche Einrichtungen führten bisher nicht zu dem gewünschten Erfolg, da teilweise das Fasergut vertikal oder horizontal verdichtet, andererseits auch im Bunker Brücken- oder Ballenbildungen hervorgerufen wurden. Bei Rippen- oder Rauhflächenkegeln konnte das gelöste Fasergut nicht abfließen.

Demgegenüber hat sich die Erfindung die Aufgabe gestellt, eine Vorrichtung zum Bunkern, Vereinzeln und Dosieren von Fasergut zu schaffen, welche auf einfache und kostengünstige Weise ein bei verschiedenen Anwendungsgebieten, beispielsweise beim U-Bahn- oder Tunnelausbau sowie im Untertageausbau ein Vereinzeln und Dosieren in anpassungsfähiger Art zuläßt.

Diese Aufgabe wird erfindungsgemäß dadurch gelöst, daß ein nach unten leicht konisch erweiterter Bunker mit Kreisquerschnitt vorgesehen ist, der unter Bildung eines Spaltes im Bodenbereich durch einen in der Drehzahl stufenlos regelbaren und mit Stiften (6) versehenen Drehkegel abgeschlossen ist.

Im Rahmen der Erfindung erweist es sich als besonders vorteilhaft, daß der Drehkegel aus glattem Blech gefertigt ist und eine Neigung von 10—30° gegen die Horizontale aufweist und daß die Stifte von 3—5 mm Höhe dem Drehkegel in Spiralreihung von der Mitte nach außen aufgesetzt sind.

Weiterhin ist es als vorteilhaft anzusehen, daß auf dem unteren Rand der Bunkerwand in den zwischen Bunkerwand und Drehkegel gebildeten Spalt hineinragend und über den Umfang verteilt Bolzen in einer Länge von 10—20 mm vorgesehen sind.

Vorteilhafte Weiterbildungen der Erfindung sind in den abhängigen Patentansprüchen 4 bis 8 näher beschrieben.

Der technische Fortschritt der Erfindung ist insbesondere darin zu sehen, daß nunmehr eine Vereinzelung und eine Dosierung von Fasergut entwickelt worden ist, die darüber hinaus auch als wirtschaftlich anzusehen ist und in bezug auf die Dosierung des Fasergutes in Abhängigkeit von der benötigten Menge eine stufenlose Regelung ermöglicht.

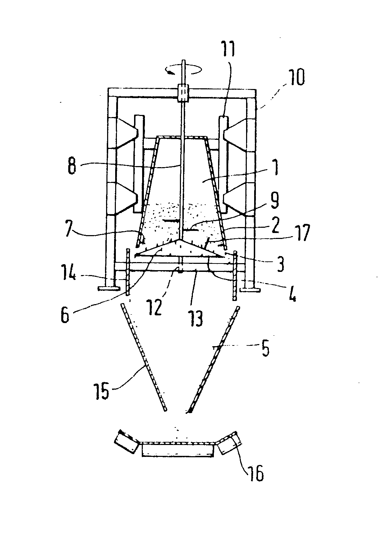

Ein Ausführungsbeispiel der Erfindung ist in der Zeichnung anhand einer schematisierten und teilweise geschnittenen Vorderansicht wiedergegeben und wird im folgenden näher erläutert.

Die in der Zeichnung anhand eines Ausführungsbeispieles dargestellte Vorrichtung zum Bunkern, Vereinzeln und Dosieren besteht im wesentlichen aus einem in einem Traggestell 10 mittels einer Bunkerführung 11 angeordneten Bunkers 1, der einen Kreisquerschnitt aufweist und nach unten leicht konisch erweitert ausgebildet ist. Im Bodenbereich des Bunkers 1 bildet die Bunkerwand 2 mit einem Drehkegel 4 einen Spalt 3. Die Spalthöhe beträgt in dem dargestellten Ausführungsbeispiel etwa 20 mm. Der Drehkegel 4 ist aus glattem Blech hergestellt und weist auf seiner Oberfläche Stifte 6 von 3—5 mm Höhe auf, die in Spiralreihung von der Mitte nach außen verlaufen.

Außerdem ist ein unterer Führfinger 17 auf dem Drehkegel 4 in halber Höhe vorgesehen. Die Neigung des Drehkegels 4 beträgt etwa 10—30° gegenüber der Horizontalen.

Der Drehkegel 4 ist mittels eines Zapfens 12 in einer Halterung 13 gelagert und wird über eine teilbar ausgebildete Antriebswelle 8 in Richtung des Pfeiles angetrieben. Ein entsprechender Antriebsmotor ist in der schematisierten Zeichnung nicht berücksichtigt. Die Teilung der Antriebswelle 8 und die auswechselbar gestaltete Lagerung des Drehkegels 4 mit einem entsprechenden Zapfen 12 stellen erhebliche Montageerleichterungen dar. In der Bunkerwand 2 sind im Bodenbereich nahe dem Drehkegel 4 über den Umfang verteilt Bolzen 7 mit einer Länge von 10—20 mm angeordnet.

An der Antriebswelle 8 ist oberhalb des Drehkegels 4 mindestens ein Rührfinger 9 vorgesehen, der eine Länge aufweist, die einem 1/4 des Bunkerdurchmessers entspricht.

Es erweist sich für Montage- oder Reparaturarbeiten als zweckmäßig, die Bunkerwand 2 im Bereich des Drehkegels 4 in leicht montierbare Bunkerwandabschnitte zu unterteilen. Unterhalb des Drehkegels 4 fließt das vereinzelte Fasergut 5 in dosierter Menge durch ein Führungsblech 14 in einen Trichter 15 und von dort auf ein Förderband 16, welches das Fasergut 5 dem Beton bzw. der Betonspritzmaschine zuführt. Es ist vorstellbar, daß das vereinzelte und dosierte Fasergut 5 direkt einem Einfülltrichter einer Spritzbetonmaschine zugeführt wird. Die Dosierbarkeit des Fasergutes 5 ist über die Rotationsgeschwindigkeit des Drehkegels 4 zu bestimmen. Es erweist sich als vorteilhaft, die Regelbarkeit der Drehzahl des Drehkegels 4 stufenlos zu gestalten.

|    |                 |
|----|-----------------|
| 1  | Bunker          |
| 2  | Bunkerwand      |
| 3  | Spalt           |
| 4  | Drehkegel       |
| 5  | Fasergut        |
| 6  | Stifte          |
| 7  | Bolzen          |
| 8  | Antriebswelle   |
| 9  | Rührfinger      |
| 10 | Traggestell     |
| 11 | Bunkerführung   |
| 12 | Lagerzapfen     |
| 13 | Halterung       |
| 14 | Führungsbleche  |
| 15 | Trichter        |
| 16 | Förderband      |
| 17 | Rührfinger      |

## Patentansprüche

1. Vorrichtung zum Bunkern, Vereinzeln und Dosieren von beispielsweise in Spritzbeton als Armierung zu verwendendem Fasergut (5), insbesondere Stahlfasern, mit einer unterhalb eines Bunkeraustrags angeordneten Dosiereinrichtung (4) vorzugsweise in Form einer rotierenden Stachelwalze, dadurch gekennzeichnet, daß ein nach unten leicht konisch erweiterter Bunker (1) mit Kreisquerschnitt vorgesehen ist, der unter Bildung eines Spaltes (3) im Bodenbereich durch einen in der Drehzahl stufenlos regelbaren und mit Stiften (6) versehenen Drehkegel (4) abgeschlossen ist.

2. Vorrichtung nach Anspruch 1, dadurch gekennzeichnet, daß der Drehkegel (4) aus glattem Blech gefertigt ist und eine Neigung von 10—30° gegen die Horizontale aufweist und daß die Stifte (6) von 3—5 mm Höhe dem Drehkegel (4) in Spiralreihung von der Mitte nach außen aufgesetzt sind.

3. Vorrichtung nach Anspruch 1, dadurch gekennzeichnet, daß auf dem unteren Rand der Bunkerwand (2) in den zwischen Bunkerwand (2) und Drehkegel (4) gebildete Spalt (3) hineinragend und über den Umfang verteilt Bolzen (7) in einer Länge von 10—20 mm vorgesehen sind.

4. Vorrichtung nach Anspruch 1, dadurch gekennzeichnet, daß der Drehkegel (4) über eine durch den Bunker (1) geführte Antriebswelle (8) angetrieben wird und die Antriebswelle (8) nahe dem Drehkegel (4) mit mindestens einem senkrecht zur Antriebswelle (8) angeordneten Rührfinger (9) versehen ist.

5. Vorrichtung nach Anspruch 4, dadurch gekennzeichnet, daß die Länge eines Rührfingers (9) vorzugsweise ein Viertel des Bunkerdurchmessers beträgt.

6. Vorrichtung nach Anspruch 1, dadurch gekennzeichnet, daß der Bunker (1) mindestens im Dosierbereich aus lösbar miteinander verbundenen Bunkerwandabschnitten besteht.

7. Vorrichtung nach den Ansprüchen 1 und 4, dadurch gekennzeichnet, daß die zwischen Antrieb und Drehkegel (4) vorgesehene Antriebswelle (8) teilbar ausgebildet ist.

8. Vorrichtung nach Anspruch 1, dadurch gekennzeichnet, daß auf dem Drehkegel (4) in halber Höhe senkrecht zur Oberfläche zusätzlich mindestens ein Rührfinger (17) vorgesehen ist.

## Claims

1. Installation for storage, separation, and dosage e. g. of fibres to be used for reinforcing shotcrete, essentially of steel fibres, and providing a dosing device preferably in the form of a rotating, spiked roller arranged below the bunker discharge, the installation being characterized by a bunker (1) of a toward its bottom moderately widening conical shape with circular cross-section and whose bottom discharge slot (3) is closed by a rotating cone (4) of steplessly adjusting rotational speed.

2. Installation as per claim n° 1, characterized by a rotating cone (4) manufactured of burnished steel sheet and spiked with 3 to 5 mm long pins (6) arranged in a spiral pattern extending from its center towards the ends, the cone being inclined between 10° and 30° towards the horizontal.

3. Installation as per claim n° 1, characterized in that bolts (7) of 10 to 20 mm length, spaced around the bunker periphery, protrude from the lower peripheral edge of its wall (2) into the bunker space, i. e. between the annular slot (3) formed by the aforesaid bunker wall (2) and the rotating cone (4).

4. Installation as per claim n° 1, characterized in that the rotating cone (4) is driven by a driving shaft (8) passing through the bunker (1) and in that the driving shaft (8) is equipped, nearby the rotating cone (4), with at least one stirring rod mounted perpendicularly to the driving shaft (8).

5. Installation as per claim n° 4, characterized in that the length of each stirring rod (9) preferably amounts to one fourth of the bunker diameter.

6. Installation as per claim n° 1, characterized in that the bunker (1) is composed, at least in the dosing section, of bunker wall segments detachably connected to each other.

7. Installation as per claims n° 1 and n° 4, characterized in that the driving shaft (8) provided between the drive and the rotating cone (4) can be dismantled into several parts.

8. Installation as per claim n° 1, characterized in that at least one additional stirring rod (17) is provided on the rotating cone midway of its height and mounted perpendicularly to its surface.

## Revendications

1. Dispositif de stockage, d'isolement et de dosage de par exemple matière fibreuse à utiliser dans le béton projeté à titre d'armature, notamment des fibres d'acier, comportant un dispositif de dosage agencé en-dessous d'une goulotte et de préférence sous forme d'un cylindre hérissé rotatif caractérisé par ce qu'une trémie à section circulaire (1) élargie légèrement en forme conique vers le bas est prévue qui se ferme en formant une fente (3), au niveau du fond, par un cône (4) tournant à variation continue de la vitesse de rotation.

2. Dispositif suivant la revendication 1, caractérisé par ce que le cône tournant (4) réalisé en tôle lisse et muni de pointes (6) de 3 à 5 mm de long disposées en spirale du centre vers l'extérieur présente un pente de 10 à 30° par rapport à l'horizontale.

3. Dispositif suivant revendication 1 caractérisé par ce que des goujons (7) de 10 à 20 mm de long sont prévus sur le bord inférieur de la paroi de la trémie (2) et qui entrent dans la fente (3) formée entre la paroi de la trémie (2) et le cône tournant (4).

4. Dispositif suivant la revendication 1, caractérisé par ce que le cône tournant (4) est entraîné par un arbre d'entraînement (8) à travers la trémie (1) et que l'arbre d'entraînement est muni près du cône tournant (4) d'au moins un doigt d'agitateur disposé perpendiculairement à l'arbre d'entraînement.

5. Dispositif suivant la revendication 4, caractérisé par ce que la longueur d'un doigt agitateur (9) est de préférence d'un quart du diamètre de la trémie.

6. Dispositif suivant la revendication 1, caractérisé par ce que la trémie (1) est constituée, au moins au niveau de dosage, de sections de paroi détachables raccordées les unes aux autres.

7. Dispositif suivant les revendications 1 et 4, caractérisé par ce que l'arbre d'entraînement (8) prévu entre l'entraînement et le cône tournant (4) est constitué d'éléments divisibles.

8. Dispositif suivant la revendication 1, caractérisé par ce que sur le cône tournant (4) au moins un doigt agitateur supplémentaire (17) est prévu à mi-hauteur perpendiculairement à la surface.